**Europäisches Patentamt**

**European Patent Office**

**Office européen des brevets**

(19)

(11) Publication number: **0 064 342**

**A2**

(12) **EUROPEAN PATENT APPLICATION**

(21) Application number: **82301949.2**

(22) Date of filing: **15.04.82**

(51) Int. Cl.³: **G 01 M 3/38**
**F 17 D 5/02**

(30) Priority: **29.04.81 GB 8113152**

(43) Date of publication of application:
**10.11.82 Bulletin 82/45**

(84) Designated Contracting States:
**AT BE CH DE FR IT LI LU NL SE**

(71) Applicant: **EDMUND NUTTALL LIMITED**
**22, Grosvenor Gardens**
**London, SW1W ODR(GB)**

(72) Inventor: **Naylor, Peter**
**21, Suffield Close Selsdon Ridge**
**Croydon Surrey(GB)**

(74) Representative: **Smith, Geoffrey Leonard et al,**
**Marks & Clerk 57/60 Lincoln's Inn Fields**
**London WC2A 3LS(GB)**

(54) **Remote inspection equipment.**

(57) The invention relates to remote inspection equipment for use in confined and inaccessible spaces. A carriage 11 mounted on slides 12 carries a rotatable and longitudinally extendible shaft 13. On the shaft 13 is a support 14 which carries a television camera 16 offset from the axis of rotation of the shaft 13 so as to be movable in orbit round the axis as the shaft rotates. The camera is also swivellable about a radial axis. A second television camera may also be carried on the support 14 for generally axial inspection.

FIG.1.

**EP 0 064 342 A2**

1.

## "REMOTE INSPECTION EQUIPMENT"

This invention relates to remote inspection equipment.

A major problem in the developed world is that water supply pipes and sewerage pipes and ducts are largely made from corrodible materials and are also in many cases of considerable age, e.g. over 100 years. A major programme of renewal of such pipeline would be enormously expensive, even if possible at all, owing to the complexity of the job and also the inaccessibility of many of the pipelines which pass beneath buildings and structures of many kinds.

Accordingly, there have been developed a number of processes of insertion of virtually incorrodible linings into such pipes. In one such process a felt tube impregnated with a curable resin is inserted into a pipe to be lined, e.g. using water pressure to force the tube through the pipe. The resin is then cured by circulating hot water through the interior of the tube which forms a permanent lining. For a fuller description of the process, reference may be made to United Kingdom

Patent Specification 1 449 445 and 1 423 819.

This in situ formation of linings is not limited in its application to water supply and sewage lines but may be used in a variety of applications where pipelines are buried or otherwise inaccessible.

In another process, lengths of preformed linings are fed successively into a pipe or conduit to be lined, each length being butt-welded to the adjacent length. This process is known as slip lining.

It will be appreciated that where, as is almost without exception the case, lateral or other connections exist, the lining has to be cut, after insertion, to open communication to the connections. Where the line is large enough to allow access, e.g. over 2 feet (60 cm) diameter, this presents no great difficulty, but where the pipes are too small to admit of access, it is normally necessary to enter via the laterally connected pipe, which normally involves excavation. The cost of excavation is high and the need for it detracts from the commercial value of lining the existing pipe or conduit rather than replacing it.

In an alternative approach a cutting tool may be drawn through the lined pipe and remotely controlled to effect the required cutting.

In all cases the interior of the pipeline needs to be inspected by remote television cameras and the cutter may also need to be continuously monitored.

The use of remotely controlled television cameras inspecting the interiors of confined spaces has many other applications besides that of monitoring the cutting of pipe lines and ascertaining the locations of lateral connections.

In our co-pending application 80304054.2 (publication No. E.P. 0029 342A), there is described and claimed a remotely controllable television camera unit comprising a carriage adapted to be moved within a confined or inaccessible space and clamped in position therein, and a television camera pivotally mounted on the carriage for movement between an axially directed position and a radially directed position and provided with remotely controlled means for pivoting the camera, adjusting the position of the camera longitudinally of the carriage and for operating the camera.

The preferred camera arrangement is described in being an axially pointing camera fixed in relation to a part of the mechanism and an adjustable camera swivellable between a forwardly pointing axial position and a somewhat backwardly pointing position for training on adjacent parts of a wall of the pipe line or other space. This comparatively large angular movement necessitates having a considerable amount of free space to accommodate the movement of the swivel camera and also has meant that in practice the drive mechanism has been exposed. This is disadvantageous when working in a hostile environment, such as the interior of a sewer, and also the mechanism may be clogged by waste from a cutter when the camera is used in conjunction with cutting equipment. Also, that application shows a cutter mounted on an exposed slide block co-operating with a slideway which is also subject to clogging and possible corrosion.

4.

In accordance with the invention, there is provided remote inspection equipment comprising a carriage adapted to be moved within a confined or inaccessible space and clamped in position therein, and a television camera mounted on a support adapted to be moved longitudinally and in rotation in relation to the carriage, the camera being offset from the axis of rotation of the support so as to move in a circular orbit as the support is rotated and being also swivellable about an axis generally radial to the said orbit, means being provided to control the movement and operation of the camera from a remote location.

A second television camera may be fixedly mounted on the support.

The remote inspection equipment may be incorporated into cutting equipment and for this purpose the support may carry a cutter unit pointing generally radially and adapted to be advanced and retracted radially.

The support may be in the form of a drum housing mechanism for the swivellable camera and for adjustment of the radial position of the cutter.

The swivellable camera is preferably so located as to align on the operative end of the cutter when in one extreme swivelled position.

The invention will be further described with reference to the accompanying drawings, which show a preferred form of the present invention and in which:-

Figure 1 is a side elevation of a preferred form of inspection equipment incorporating a cutter, in accordance with the invention;

Figure 2 is an end elevation of the equipment of Figure 1;

Figure 3 is a partial plan view of the equipment of Figures 1 and 2;

Figure 4 is a sectional view showing some details; and

Figure 5 is a further sectional view, to an enlarged scale, showing further details.

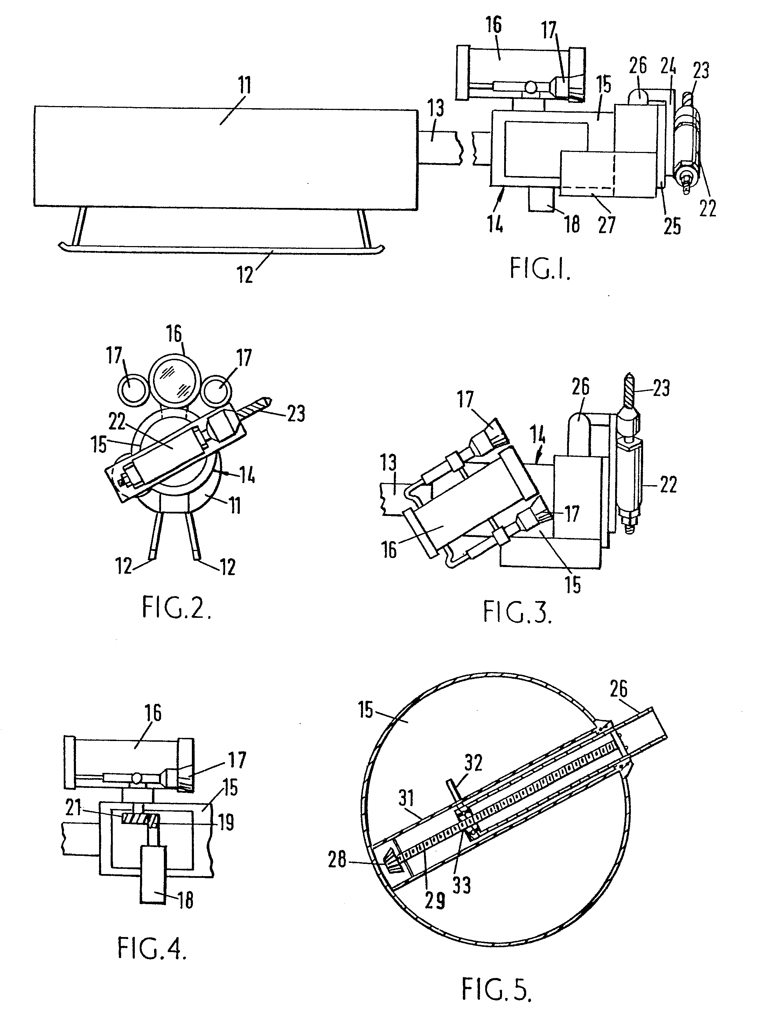

Figures 1 and 2 show a carriage 11 mounted on runners 12, and internally the carriage 11 is similar to the corresponding structure described in the above mentioned application. This structure forms no part of the present invention. It is sufficient to say that the carriage 11 may be dragged through a pipeline or conduit on the runners 12 and by means of a shaft 13, also illustrated in Figure 3, it carries a support generally indicated by the reference numeral 14 in a manner so that it is adjustable both axially and rotationally about the axis of the shaft 13. The support 14 includes a body 15 on which a television camera 16 is mounted for swivelling about a radial axis. Attached to the camera 16 are light sources 17. Figure 4 illustrates how a motor and reduction gear unit 18 drives a pinion 19 in mesh with a pinion 21 solid with the camera to provide swivelling. In Figure 3 the camera 16 is shown in a swivel position, whereas in Figures 1,2 and 4 it is shown in a generally axial alignment.

At the forward end, the support 15 carries a cutter device including a motor 22 and a bit 23. These items are mounted on a slide 24 cooperating with a slideway 25, and the slide 24 is solid with a radial adjustment

0064342

6.

tube 26 mounted in the forward end of the body 15. The
tube 26 is adapted to be adjusted by means of a motor
and gear box unit (not shown) mounted in a housing 27 and
having an outlet bevel gear (not shown) in mesh with a
bevel gear 28 (see Figure 5) mounted on a lead screw.29
extending diametrically of the body 15.

A guide tube 31 extends diametrically of the
body 15 and carries a guide slot (not shown) constraining
a slide member 32 on the tube 26 to move diametrically of
the body 15. The adjustment tube 26 carries a captive
nut 33 engageable with the lead screw 29, and being constrained against rotation relative to the guide tube 31,
rotation of the lead screw 29 by means of the bevel gear
28 leads to diametral adjustment of the position of the
tube 26 and hence of the cutter motor 22 and bit 23 solid
therewith. In Figure 3, the motor 22 and bit 23 are shown
in an outwardly adjusted position in which the bit may be
brought into engagement with a lining to be  cut. It will
be seen that the camera 16, in its swivelled position, is
directed at the working end of the bit 23 so as to monitor
the operation. By suitably controlling the movement of
the support 14, the working end of the bit may follow any
desired path on the lining.

If required, a further camera may be mounted on
forward end of the support 14, i.e. supported beyond the
motor 22 by means of brackets attached to the body 15,
and this camera may be either adjustable or fixedly
trained in an axial direction as required.

Various modifications may be made within the
scope of the invention.

1.

CLAIMS:

1.      Remote inspection equipment comprising a carriage adapted to be moved within a confined or inaccessible space and clamped in position therein, and a television camera mounted on a support adapted to be moved longitudinally and in rotation in relation to the carriage, characterised in that the camera (16) is offset from the axis of rotation of the support so as to move in a circular orbit as the support(14) is rotated and in that the camera (16) is also swivellable about an axis generally radial to the said orbit, means being provided to control the movement and operation of the camera from a remote location.

2.      Remote inspection equipment according to claim 1, characterised by comprising a second television camera fixedly mounted on the support.

3.      Remote inspection equipment according to claim 1 or 2, characterised in that the support (14) is in the form of a drum (15) which houses mechanism (18,19,21) for the swivellable camera (16).

4.      Remote inspection equipment according to claim 1, 2 or 3, characterised in that the support (14) also carries a cutter unit (22,23) pointing generally radially and adapted for radial advance and retraction on the support (14).

5.      Remote inspection equipment according to claim 4,  characterised in that swivellable camera (16) is located so as to align on the operative end of the cutter (23) when in one extreme swivelled position.

FIG.I.

FIG.2.

FIG.3.

FIG.4.

FIG.5.